# EUROPEAN PATENT APPLICATION

(11) **EP 4 557 053 A1**
(43) Date of publication of application: **21.05.2025**
(21) Application number: 23871508.0
(22) Date of filing: 09.08.2023
(51) Int. Cl.: G06F 3/01, G06F 3/0338, G06F 3/0354

(54) **FINGER-MOUNTED CONTROLLER**

(30) Priority: 29.09.2022 JP 2022155781
(71) Applicant: NISSHA CO., LTD., Kyoto-shi, Kyoto 604-8551 (JP)
(72) Inventor: WATAZU, Yuji, Kyoto-shi, Kyoto 604-8551 (JP); MIURA, Tsutomu, Kyoto-shi, Kyoto 604-8551 (JP); TSUCHIYA, Shin-ichi, Kyoto-shi, Kyoto 604-8551 (JP); SHIGENARI, Takuto, Kyoto-shi, Kyoto 604-8551 (JP); SHIMADA, Mayumi, Kyoto-shi, Kyoto 604-8551 (JP); FUKUDA, Kengo, Kyoto-shi, Kyoto 604-8551 (JP); OBA, Fumi, Kyoto-shi, Kyoto 604-8551 (JP)
(74) Representative: Winter, Brandl - Partnerschaft mbB
(86) International application number: PCT/JP2023/029147
(87) International publication number: WO 2024/070266

(57) **Abstract**

There is provided a finger-mounted controller that minimizes obstruction of movement of a body or a hand of a user, and that allows input of various pieces of operation information. A finger-mounted controller 1 of the present invention is a finger-mounted controller for controlling an external electronic device by being fitted on a finger 2 of a user, and includes a mounting member 4 including a first opening 4a for receiving a first finger 21 of the user, a first sensor 5 that is film-shaped and that is disposed on at least a part of an outer surface of the mounting member 4, the first sensor configured to detect force in three axes on an active area 5a, a protective layer 6 for covering the first sensor 5, a control circuit 7 that is housed inside the mounting member 4, and that is electrically connected to the first sensor 5, a wireless transmitter/receiver 8 that is housed inside the mounting member 4 and is configured to communicate with the external electronic device by being electrically connected to the control circuit 7, and a battery 9 that is housed inside the mounting member 4, the battery being for supplying power to the control circuit 7.

## Description

### Technical Field

The present invention relates to a finger-mounted controller that minimizes obstruction of movement of a body or a hand of a user, and that allows input of various pieces of operation information.

### Background Art

These days, image processing technologies, such as AR, VR, MR, and SR, for combining digital information with information of a real world are being widely used. These technologies are collectively referred to as xR. By using the xR technology, one may enjoy an experience as if he/she is actually moving a hand and operating a machine in an imaginary space, or may enjoy an experience as if he/she is actually walking in the past or in a virtual world. For example, there are attractions in amusement parks where, when one takes a ride wearing goggles, one can enjoy a feeling of flying in the air without actually flying. There are also games where, when a landscape is captured by a camera of a smartphone, a character that is not actually present is caused to appear. The xR technology is coming to be used in various fields including fields of industry, education, medical treatment, and retail trade, without being limited to the field of amusement.

Augmented Reality (AR) is a technology of overlaying digital information such as CG and text on information of a real world. When a CG character or a CG building is overlaid on an image captured by a smartphone, a tablet terminal or the like, one can enjoy an experience as if the character or the building is actually present.

Virtual Reality (VR) creates a virtual world by using CG, an image that uses special effects, or the like, and provides an experience where it feels like one is moving in a virtual space as if he/she is in a real world. A user sees an image in the virtual space or performs an operation by using a head-mounted display, a dedicated controller, or the like.

Although it is the same as AR in that digital information is overlaid on information of a real world, Mixed Reality (MR) causes a real world and a virtual world to be combined in a more mixed manner by overlaying data of the real world in a virtual space, for example. By using a head-mounted display or the like, a plurality of persons can have a conversation or perform a group work in the same virtual space as if they are in the real world, or an image of the real world can be viewed in the virtual space.

Substitutional Reality (SR) is a technology of causing information of a different real world to be recognized as information of a present real world by substituting information of a virtual world with different information of a real world and causing the different information to be perceived. For example, a 360-degree image of a past or a different location is shown by a head-mounted display so that a person can feel as if he/she is actually present at a corresponding location.

In relation to xR, various interfaces for increasing immersive sensation or for capturing movement of a person into a virtual world in real time are being developed. The interfaces may be mainly divided into interfaces for receiving information and interfaces for inputting information of a real world as digital information.

First, the interfaces for receiving information include head-mounted displays and smartglasses, for example.

The head-mounted display is a collective term for displays to be worn on a head, and comes in various shapes such as goggles and glasses. A direction in which a face of a wearing person faces is detected by a gyrosensor, an angular velocity sensor or the like, and a matching image is projected. Accordingly, a line of sight can be moved 360 degrees in a virtual space shown on a display as in a real world. A display part may be non-transparent such that surroundings cannot be viewed when the display is worn, or the display part may allow an external image to be checked by a camera, or a display may be semitransparent such that outside can be simultaneously checked.

The smartglasses are a type of a glass-type head-mounted display, include a camera and a retinal projector display, and are small and light like normal glasses. Unlike a goggle-type head-mounted display, the smartglasses allow a surrounding view to be checked, and are thus mainly used in AR for displaying digital information in a real world. For example, an operation procedure is displayed on a per-device basis to support movement of a worker.

As the interfaces for inputting information, there are controllers provided with an accelerometer or a gyrosensor, motion sensors, glove-type sensors, tactile sensors, and the like, for example.

With a system such as a surgical simulator with which a complex operation is performed, a controller dedicated to the system is necessary (see Patent Literature 1). An accelerometer and a gyrosensor for detecting two-dimensional movement in XY directions and movement in Z or θ direction are used for the purpose of inputting an operation of moving, twisting, or rotating an object on such a controller.

A motion sensor detects a movement of a body based on a sensor attached to each part of a human body (see Patent Literature 2). Because a movement of a body can be accurately detected in real time, movement of a character in a virtual world may be made smooth.

A glove-type sensor is a sensor that is used by being worn on a hand of a person. Because small movements of finger joints are detected, an object can be held or released in a virtual world as if the object is actually grabbed by a hand (see Patent Literature 3). Fine work of operating a keyboard in a virtual space as if in a real world can be performed, for example.

A tactile sensor is a sensor that is capable of measuring a force, a temperature or the like on a contact surface. Normally, a sensor that detects force only in a Z-direction is mainly used, but there is also a 3-axis force sensor that is capable of detecting force in three axes (XYZ directions). By measuring force in three axes at a contact point, a pressing force (pressure), a half-slipping state, a slipping state and the like can be detected, and a behavior close to a sense of touch of a person can be detected. For example, there may be cited a feeling of friction of a fingertip against an object that is felt when a fingertip placed on a surface of an object is slid, or a gripping power and a change in a frictional force when screwing a screw with a screwdriver. Moreover, the tactile sensor may have a thin sheet shape. By covering a floor with such a sheet sensor, a foot pressure on a ground, and a frictional force on a sole of a foot can be detected. Not only a movement but also a change in force can be reflected in the virtual space, and thus, an action can be input in a more real manner (see Patent Literature 4).

### Citation List

### Patent Literature

Patent Literature 1: Japanese Translation of PCT International Application Publication No. 2020-515891
Patent Literature 2: Japanese Translation of PCT International Application Publication No. 2017-511906
Patent Literature 3: Japanese Patent Laid-Open No. 09-054540
Patent Literature 4: Japanese Translation of PCT International Application Publication No. 2021-511133

### Summary of Invention

### Technical Problem

As described above, with xR, generally, a head-mounted display is worn by a user and a video created by a computer is displayed on a display screen covering eyes, and the user is made to experience xR. At this time, the user has to input information in response to a request for text input or item selection displayed on the display screen, and thus, a controller to be held in a hand is necessary.

Now, with xR, a user may handle an object in a real world that is seen through a display or a virtual object displayed on a display screen of a head-mounted display or the like, or a user may move around in a virtual space by actually moving in a real space. For example, a worker at a machine assembly line in a factory is made to wear a head-mounted display, receive, on a display screen, an instruction or a support regarding details of work from a head office at a remote location while checking assembly parts in a real world through the display, and fasten screws in order with a tool that is held in a hand. In this case, there is a problem that, if a controller is held in a hand due to necessity of input as described above, movement of the body or hand of the worker is obstructed, and the work is obstructed.

Accordingly, an object of the present invention is to solve the problem described above, and to provide a finger-mounted controller that minimizes obstruction of movement of a body or a hand of a user, and that allows input of various pieces of operation information.

### Solution to Problem

In the following, a plurality of aspects as means for solving the problem will be described. The aspects may be combined in any way as necessary.

A finger-mounted controller according to an aspect of the present invention is for controlling an external electronic device by being fitted on a finger of a user. The finger-mounted controller includes a mounting member, a first sensor, a protective layer, a control circuit, a wireless transmitter/receiver, and a battery. The mounting member includes a first opening for receiving a first finger of the user. The first sensor is a film-shaped sensor that is disposed on at least a part of an outer surface of the mounting member. Furthermore, the first sensor is for detecting force in three axes on an active area. The protective layer covers the first sensor. The control circuit is housed inside the mounting member, and is electrically connected to the first sensor. The wireless transmitter/receiver is housed inside the mounting member and is configured to communicate with the external electronic device by being electrically connected to the control circuit. The battery is housed inside the mounting member, and supplies power to the control circuit.

The finger-mounted controller configured in the above manner does not have to be held in a hand, and can thus minimize obstruction to movement of a body or a hand of a user at the time of operation. Moreover, because force in three axes is detected, various pieces of operation information can be input by one finger not wearing the finger-mounted controller.

The mounting member may be ring-shaped or fingerstall-shaped.

In the case where the mounting member is fingerstall-shaped, the active area of the first sensor mentioned above may be positioned on a belly of a fingertip of the first finger of the user.

Input can be performed by pressing the belly of the fingertip of the finger wearing the finger-mounted controller configured in the above manner against a desk or a part of a body (such as a thigh or a back of a hand not wearing the finger-mounted controller).

Furthermore, the first finger mentioned above may be one of four fingers of one hand of the user other than a thumb, and the active area of the first sensor may be positioned at a part that can be touched by the thumb of the one hand.

The finger-mounted controller configured in the above manner can be easily operated by one hand.

In the case where the first sensor is to be operated with a thumb, a thickness of the protective layer may be increased only on the active area of the first sensor to form a protruding part.

The finger-mounted controller configured in the above manner allows a user to easily recognize a position of the active area of the first sensor just by feeling with the thumb, without using eyes.

Moreover, in the case where the first sensor is to be operated with a thumb, there may be further provided a second sensor that is disposed on an outer surface of the mounting member in a manner facing a second finger that is one of four fingers other than the thumb and that is next to the first finger, the second sensor configured to detect presence/absence of pressure or contact between the first finger and the second finger. The control circuit is electrically connected also to the second sensor, and controls the first sensor such that power consumption is smaller when absence of the pressure or the contact is detected by the second sensor than when presence of the pressure or the contact is detected. With the finger-mounted controller configured in the above manner, the first sensor can be controlled such that power consumption is smaller when absence of the pressure or the contact is detected by the second sensor than when presence of the pressure or the contact is detected. A state where power consumption is small is a state where detection by the first sensor is not performed or a state where a detection interval of the first sensor is increased, for example.

Moreover, in the case where the mounting member is ring-shaped as described above, the mounting member may include a second opening. The second opening is for receiving a second finger that is one of three fingers of the same hand other than the thumb and the first finger and that is next to the first finger.

With the finger-mounted controller configured in the above manner, when a shearing force is applied to a pressure sensitive surface of the finger-mounted controller, in a circumferential direction of the first finger, the second finger inserted into the second opening serves as a stopper, and the mounting member can be prevented from rotating around the first finger.

Furthermore, the first sensor may not only detect, on the active area, a shearing force that is applied at least in an in-plane direction and a pressing force that is applied in a normal direction of a surface, but may also include a touch sensor function for detecting whether an object is coming into contact or into proximity.

With the finger-mounted controller configured in the above manner, a greater variety of operation information can be input.

### Advantageous Effects of Invention

With the finger-mounted controller of the present invention, obstruction of movement of a body or a hand of a user can be minimized, and various pieces of operation information can be input.

### Brief Description of Drawings

[Figure 1] Figure 1 is an explanatory diagram showing an example configuration of a finger-mounted controller (ring-shaped) according to the present invention and an example of attachment.
[Figure 2] Figure 2 is a schematic cross-sectional view showing an example configuration of the finger-mounted controller (ring-shaped) according to the present invention.
[Figure 3] Figure 3 is an explanatory diagram showing an example of operation of the finger-mounted controller (ring-shaped) shown in Figure 1.
[Figure 4] Figure 4 is a schematic cross-sectional view showing another example configuration of the finger-mounted controller (ring-shaped) according to the present invention.
[Figure 5] Figure 5 is a schematic cross-sectional view showing another example configuration of the finger-mounted controller (ring-shaped) according to the present invention.
[Figure 6] Figure 6 is an explanatory diagram showing another example of attachment of the finger-mounted controller (ring-shaped) according to the present invention.
[Figure 7] Figure 7 is an explanatory diagram showing an example configuration of a finger-mounted controller (fingerstall-shaped) according to the present invention and an example of operation.
[Figure 8] Figure 8 shows explanatory diagrams showing another example configuration of the finger-mounted controller (fingerstall-shaped) according to the present invention and an example of attachment.
[Figure 9] Figure 9 is an explanatory diagram showing an example of operation of the finger-mounted controller (fingerstall-shaped) shown in Figure 8(b).
[Figure 10] Figure 10 is a diagram showing a definition of forward/backward/left/right of the finger-mounted controller according to the present invention on an operation surface.
[Figure 11] Figure 11 shows diagrams for describing an example of text input by a flick-like operation that is performed using the finger-mounted controller according to the present invention.
[Figure 12] Figure 12 shows diagrams for describing another example of text input by a flick-like operation that is performed using the finger-mounted controller according to the present invention.
[Figure 13] Figure 13 shows diagrams for describing another example of text input by a flick-like operation that is performed using the finger-mounted controller according to the present invention.
[Figure 14] Figure 14 is a diagram for describing an example of operations related to text input performed using a touch sensor function.
[Figure 15] Figure 15 is a schematic cross-sectional view showing a modification of the finger-mounted controller (ring-shaped) according to the present invention.
[Figure 16] Figure 16 shows diagrams for describing an example of multi-layer item selection that uses a ring menu that uses the finger-mounted controller according to the present invention.
[Figure 17] Figure 17 is a diagram for describing an example of operations related to item selection performed using a touch sensor function.

### Description of Embodiments

The following embodiments describe cases of application of a finger-mounted controller of the present invention.

An application range of a finger-mounted controller of the present invention is not limited to xR-related use described under the section "Background Art". Application to other than xR-related use is also possible as long as application is related to use in a situation where holding a controller in a hand obstructs movement of a body or a hand of a worker and obstructs work. For example, the finger-mounted controller can be used to control an external electronic device at a time of using an audio system or a telephone system of a vehicle during driving or at a time of a similar situation.

Moreover, in the present specification, a term "finger" refers to any finger of a user including a thumb, an index finger, a middle finger, a ring finger, and a pinky of a hand. The finger-mounted controller of the present invention is preferably fitted to a dominant hand of the user.

### [First Embodiment]

Hereinafter, a first embodiment of the present invention will be described with reference to the drawings.

### 1. Structure of Finger-mounted Controller

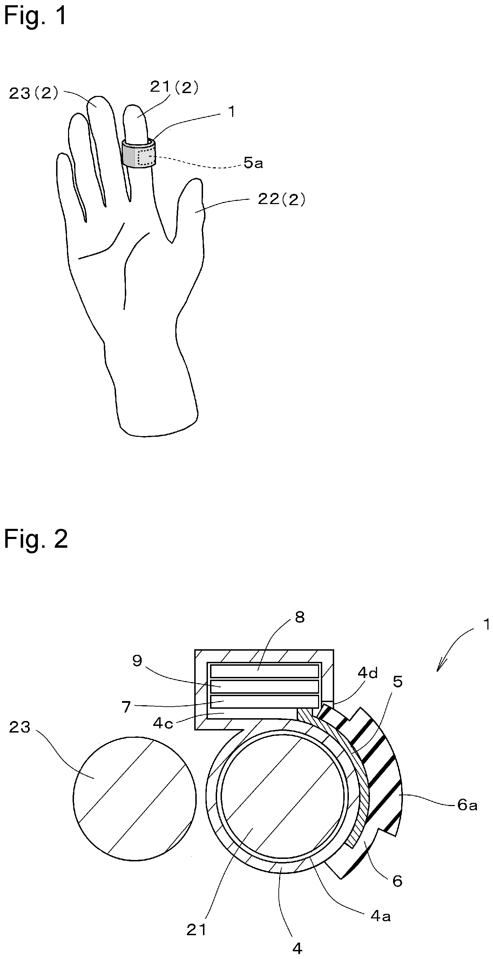

Figure 1 is an explanatory diagram showing an example configuration of a finger-mounted controller (ring-shaped) according to the present invention and an example of attachment. Figure 2 is a schematic cross-sectional view showing an example configuration of the finger-mounted controller (ring-shaped) according to the present invention.

A finger-mounted controller 1 of a first embodiment is ring-shaped, and as shown in Figure 1, the finger-mounted controller 1 controls an external electronic device by being fitted on a finger 2 of a user. As shown in Figure 2, the finger-mounted controller 1 includes a mounting member 4, a first sensor 5, a protective layer 6, a control circuit 7, a wireless transmitter/receiver 8, and a battery 9.

### (1) Mounting member

The mounting member 4 includes a first opening 4a for receiving a first finger 21 of the user. The first finger 21 is one of four fingers, other than a thumb, of one hand of the user, and in the example shown in Figures 1 and 2, the first finger 21 is an index finger.

An inner circumferential surface of the first opening 4a desirably has an inner diameter and a shape that fit the first finger 21 of the user such that the finger-mounted controller 1 does not fall off the first finger 21 during use.

Furthermore, an outer surface of the mounting member 4 has a smooth flat surface or a smooth cylindrical surface (see Figure 2) at at least a part where the first sensor 5 is disposed.

Moreover, as shown in Figure 2, the mounting member 4 includes a space 4c for housing the control circuit 7, the wireless transmitter/receiver 8 and the battery 9, and an outlet 4d for a wire that extends between the control circuit 7 housed in the space 4c and the first sensor 5 that is disposed on the outer surface.

As a material of the mounting member 4, there may be cited general-purpose resins such as polystyrene-based resin, polyolefin-based resin, ABS resin, AS resin, and AN resin, for example. It is also possible to use general-purpose engineering resins such as polyphenylene oxide polystyrene-based resin, polycarbonate-based resin, polyacetal-based resin, polyacrylic-based resin, polycarbonate modified polyphenylene ether resin, polybutylene terephthalate resin, and ultrahigh molecular weight polyethylene resin, and super-engineering resins such as polysulfone resin, polyphenylene sulfide-based resin, polyphenylene oxide-based resin, polyarylate resin, polyether-imide resin, polyimide resin, liquid crystal polyester resin, and polyallyl-based heat-resistant resin. The mounting member 4 that uses such a resin may be a single resin molded article, or may be a resin molded article including a plurality of resin layers. Furthermore, the mounting member 4 that uses such a resin may be an assembly of a plurality of resin molded articles.

Particularly, to achieve superior deformability for fitting the first finger 21 of the user, a part to be an inner circumferential surface of the first opening 4a desirably uses thermoplastic elastomer resin that is polyester-based, olefin-based, urethane-based, or polyamide-based, for example.

Moreover, as a material of the mounting member 4, metal, wood, glass, ceramic, or the like may also be used. Furthermore, a composite product or an assembly of such a material and a resin molded article may also be used.

Additionally, in the case where a material poor in deformability is used as the part to be the inner circumferential surface of the first opening 4a, one that fits the first finger 21 of the user is selected from a line-up of two or more finger-mounted controllers 1 that are different in relation to the inner diameter or the shape of the first opening 4a. Alternatively, only the part to be the inner circumferential surface of the first opening 4a may be replaceable with one with a different inner diameter or a different shape, or a gap adjustment material may be added to the inner circumferential surface of the first opening 4a after purchase.

### (2) First Sensor

The first sensor 5 is a 3-axis force sensor that is film-shaped and that is disposed on at least a part of the outer surface of the mounting member 4.

The 3-axis force sensor simultaneously detects, on an active area 5a, a pressing force (pressure) and a slipping force (frictional force) of a fingertip. The frictional force can be measured in terms of not only direction but also size, and thus, it is possible to input size such as volume or speed. A direction and a movement amount can be simultaneously input by a small movement of the finger compared to other user interfaces (UI) such as a joystick, a cross key, and a mouse. As the 3-axis force sensor having a film shape, other known sensors such as a capacitive sensor, a piezoelectric sensor, and a strain gauge may be adopted.

Moreover, because the first sensor 5 is film-shaped, attachment to a cylindrical surface as shown in Figure 2 is possible.

Furthermore, the first sensor 5 according to the present embodiment not only detects force in three axes on the active area 5a, but also includes a touch sensor function of detecting whether an object is coming into contact or into proximity. Accordingly, a greater variety of operation information can be input. Here, in relation to an example where the touch sensor function is included, there may be cited an example where a touch sensor electrode is stacked and added on an outside of the 3-axis force sensor, an example where a touch sensor electrode is added inside the 3-axis force sensor in parallel with electrodes of the 3-axis force sensor, an example where a part of electrodes of the 3-axis force sensor is used also as a touch sensor electrode and the like.

The active area 5a of the first sensor 5 may have any shape such as a square, a rectangle, a circle, or an oval. Furthermore, a maximum width of the active area 5a of the first sensor 5 may be about 15 mm to 20 mm.

Additionally, the active area 5a of the first sensor 5 is positioned at a part that can be touched with a thumb 22 of the same hand as the first finger 21 on which the finger-mounted controller 1 is fitted. For example, operation by the thumb 22 is facilitated when the active area 5a of the first sensor 5 is provided on a side of the first finger 21 close to the thumb 22 or from the side to a belly. In the example shown in Figure 1, the active area 5a is provided across a side and a belly of the index finger that is the first finger 21, between a first joint and a second joint.

### (3) Protective Layer

As shown in Figure 2, the first sensor 5 is covered by the protective layer 6.

The protective layer 6 is for protecting the first sensor 5 where a force is applied. A top surface of the protective layer 6 is a contact surface to the thumb 22, or in other words, a pressure sensitive surface.

As a material of the protective layer 6, there may be cited a foam material, or a rubber sheet made of urethane, silicone, epoxy, saponified ethylene-vinyl acetate copolymer, polyethylene, polypropylene, polystyrene, butadiene, or the like. To increase permittivity, carbon powder or the like may be added thereto. The rubber sheet or the foam material is stuck to perform covering by the protective layer 6. Alternatively, insert molding of placing the mounting member 4 on which the first sensor 5 is stuck inside a mold and pouring liquid rubber material or the like may be performed. The protective layer 6 has preferably a thickness of 5 mm or less at its thickest. When a thickness exceeds 5 mm, the finger-mounted controller 1 becomes too thick and may prevent the hand, the first finger 21 of which wears the finger-mounted controller 1, from performing other tasks. Furthermore, the protective layer 6 has preferably a thickness of 0.5 mm or more at its thinnest. When the thickness is smaller than 0.5 mm, the first sensor 5 is not sufficiently protected.

Moreover, design may be improved by attaching a decorative sheet, leather, rubber, cloth or the like as the protective layer 6.

Additionally, as shown in Figure 2, the protective layer 6 of the present embodiment is thick only above the active area 5a of the first sensor 5, and a protruding part 6a is thereby formed.

Because the protective layer 6 includes the protruding part 6a, the user may easily recognize the position of the active area 5a of the first sensor 5 just by feeling with the thumb 22, without looking at the finger-mounted controller 1. The protruding part 6a is preferably formed to have a thickness of 0.5 mm to 2 mm.

### (4) Control Circuit

The control circuit 7 is housed inside the mounting member 4, and is electrically connected to the first sensor 5.

The control circuit 7 is formed from a CPU and other electronic components. The control circuit 7 controls various operations of the finger-mounted controller 1, in addition to the first sensor 5.

### (5) Wireless Transmitter/Receiver

The wireless transmitter/receiver 8 is housed inside the mounting member 4 and is configured to communicate with an external electronic device 3 by being electrically connected to the control circuit 7.

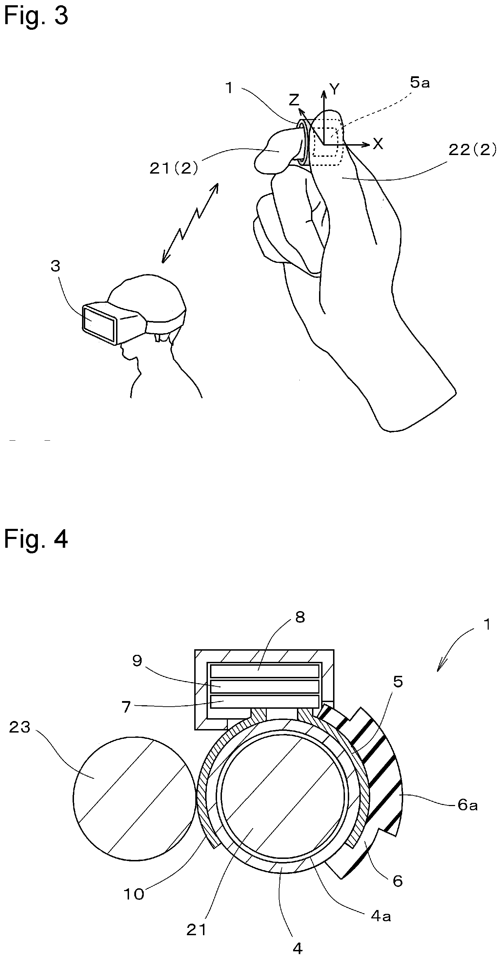

The external electronic device 3 as a counterpart of communication may be, but not limited to, a head-mounted display (see Figure 3) or smartglasses used for xR, a smart television, a laptop computer, a desktop computer, a tablet computer, an audio system of a vehicle, an automatic control device for home, work or environment, or any other such device or system, for example.

The wireless transmitter/receiver 8 communicates with an external electronic device via a wireless LAN such as WI-FI (registered trademark), BLUETOOTH (registered trademark), or NFC. The wireless transmitter/receiver 8 is capable of unidirectional or bidirectional communication. Additionally, the finger-mounted controller 1 may control a plurality of external electronic devices 3 at the same time or independently.

### (6) Battery

The battery 9 is housed inside the mounting member 4, and supplies power to the control circuit 7.

As the battery 9, a rechargeable battery such as a lithium battery may be used. In the case of a rechargeable battery, the user may perform charging via an USB or by simply placing the finger-mounted controller 1 on a charging pad. Moreover, a non-rechargeable battery may be used as the battery 9, and the battery 9 may be removed from the mounting member 4 and be replaced.

### 2. Operation of Finger-mounted Controller

Figure 3 is an explanatory diagram showing an example of operation of the finger-mounted controller (ring-shaped) shown in Figure 1.

As shown in Figure 3, operation of the finger-mounted controller 1 is performed by touching the active area 5a of the first sensor 5 with the thumb 22. The external electronic device 3 is controlled by detecting pressure when a contact surface of the active area 5a is pressed with the thumb 22 in a Z-axis direction, and by detecting a frictional force when the thumb 22 slides on the contact surface of the active area 5a in XY directions.

An example of operation will be described below.

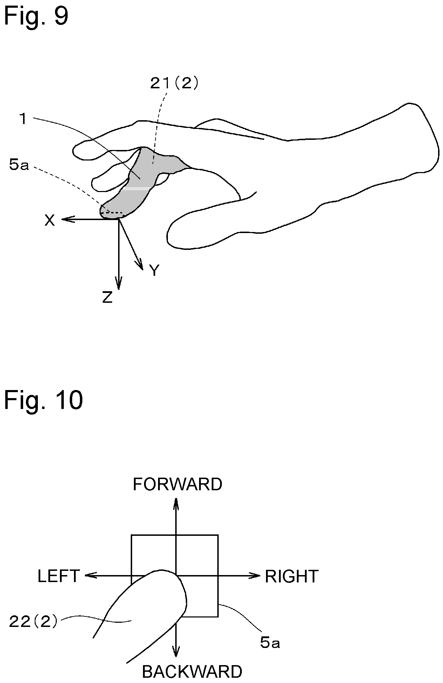

First of all, forward/backward/left/right directions (see Figure 10) on the contact surface of the active area 5a of the first sensor 5 are defined to correspond to up/down/left/right directions of a GUI (Graphical User Interface) of an external electronic device. In the case of xR-related use, the external electronic device 3 is a head-mounted display. A direction of input, among forward/backward/left/right on an operation surface, is detected based on the frictional force detected by the first sensor 5.

### (1) Text Input by Flick-Like Operation

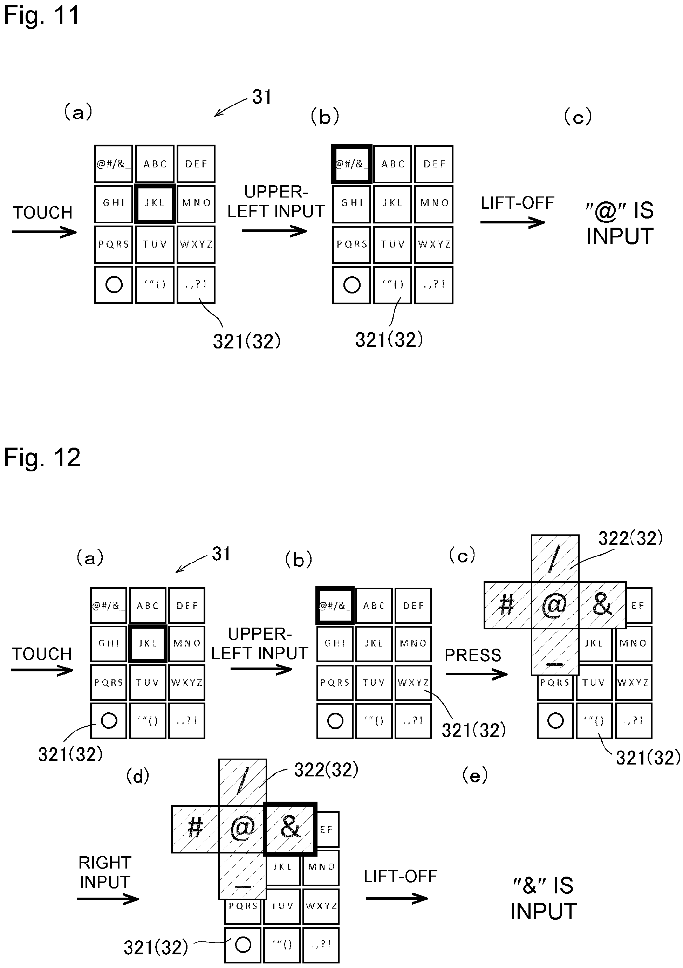

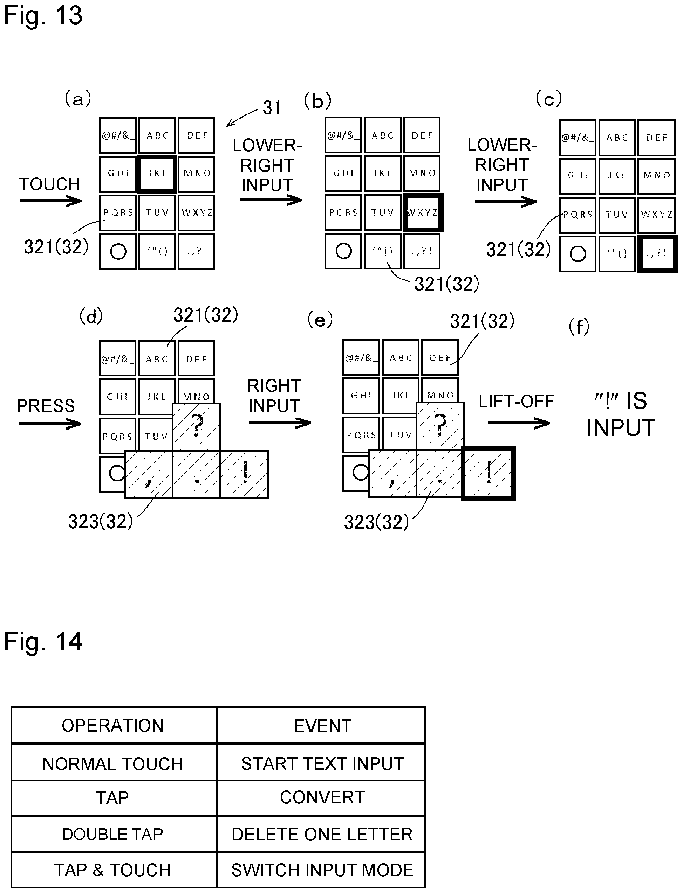

Figures 11 to 13 are each a diagram for describing an example of text input by a flick-like operation. Figure 11 shows a case of inputting "@", Figure 12 shows a case of inputting "&", and Figure 13 shows a case of inputting "!".

In the case where "@" is to be input, first, a touch on the operation surface with the thumb 22 is detected by the first sensor 5, and 3 × 4 = 12 sections (GUI 32) showing alphabetical letters and symbols are displayed on a screen 31 of the head-mounted display. At first, "JKL" at a center is displayed in an emphasized manner on the screen, and it is indicated that a user is touching the operation surface of the first sensor 5 (see Figure 11(a)). Here, the user may change a selected section by applying a force in forward/backward/left/right directions on the operation surface. In the example shown in Figure 11(b), the section is changed to a section "@#/&_" by application of a force in a left-forward direction on the operation surface. Then, "@" is input when the user separates (lifts off) the thumb 22 from the operation surface of the first sensor 5 in a state where "@" is selected.

A case where "&" is to be input is as shown in Figure 11 up to selection of "@" (see Figures 12(a) and (b)). Then, when the user presses the operation surface of the first sensor 5 without lifting off the thumb 22, a color or a size of a section "@" is changed, and at the same time, new sections 322 appear at top/bottom/left/right of a display screen (see Figure 12(c)). When the user applies a force in a right direction on the operation screen, a section "&" is selected (see Figure 12(d)). Then, "&" is input when the user performs lift-off.

A case where "!" is to be input is as shown in Figure 11 up to first emphasized display of "JKL" (see Figure 13(a)). Then, when the user applies a force in a right-backward direction on the operation surface, a section "WXYZ" is selected (see Figure 13(b)). When the user further applies a force in a backward direction on the operation surface, a section ".,?!" is selected (see Figure 13(c)). Then, when the user presses the operation surface of the first sensor 5 with the thumb 22, a color or a size of the section ".,?!" is changed, and at the same time, new sections 323 appear in upward/left/right directions on the display screen (see Figure 13(d)). When the user then applies a force in the right direction on the operation screen, a section "!" is selected (see Figure 13(e)). Then, "!" is input when the user performs lift-off.

As described above, text input can be swiftly performed by using a GUI that uses a flick operation that is similar to that of a smartphone and by operating the finger-mounted controller 1 fitted on the first finger 21 of the user with just the thumb 22.

Furthermore, conversion, text deletion, input mode switching and the like may be performed by tap, double tap, and tap & touch by using the touch sensor function as shown in the table in Figure 14. Input mode switching (mode switching between alphabet input and number input) is performed by displaying a section showing a plurality of input modes as a GUI after detection of tap & touch and by selecting a mode that is desired to be input.

Additionally, the above-described example of operation that uses the film-shaped 3-axis force sensor can be applied to a conventional remote control, a conventional pad and the like that are to be held in a hand.

### (2) Multi-Layer Item Selection by Ring Menu

Moreover, a large number of items across multiple layers can be selected by detecting forces in three axes by the first sensor 5 that is a 3-axis force sensor.

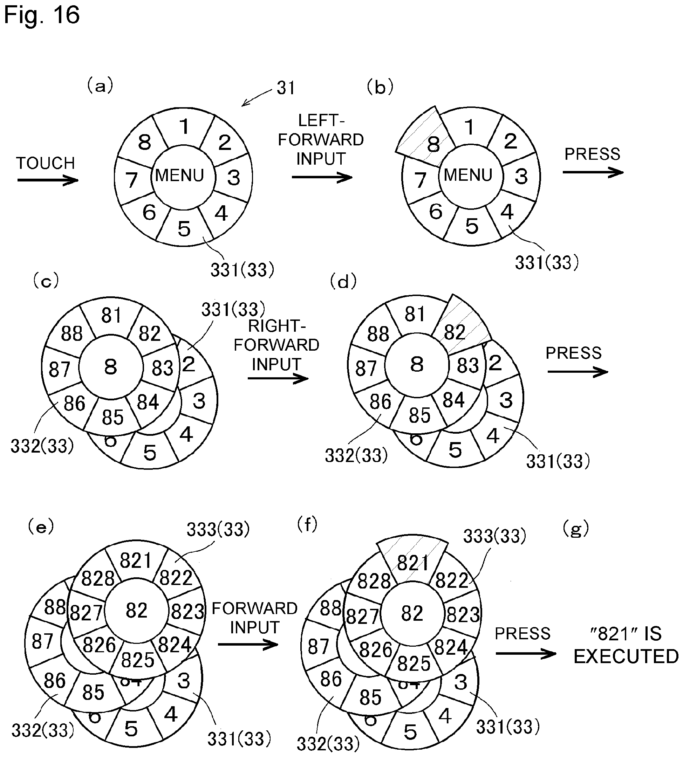

Figure 16 is a diagram showing an example of multi-layer item selection using a ring menu.

First, the thumb 22 touching the operation surface is detected by the first sensor 5, a GUI 33 (a ring menu) including eight sections arranged in a ring shape is shown on a screen 31 of the head-mounted display, and selection items "1" to "8" are displayed clockwise from a section at a top (see Figure 16(a)). Here, the user can select one of eight items on a layer for "menu" (a first layer 331) by applying a forward/backward/left/right, right-forward, left-forward, right-backward, or left-backward force on the operation surface. In the example shown in Figure 16(b), a force in the left-forward direction is applied on the operation surface, and a section "8" is selected. Additionally, the selected section is made to stand out by having a size and a color changed.

Then, when the user presses the operation surface of the first sensor 5 with the thumb 22 in a state where "8" is selected on the layer for "menu" (the first layer 331), a next layer is reached (see Figure 16(c)). In the example shown in Figure 16(c), in relation to a layer for "8" (a second layer 332), a new ring menu is superimposed with a position of the item "8" at a center, and selection items "81" to "88" are displayed clockwise from a section at a top. Here, as in the case of the first layer 331, the user can select one of the eight items on the layer for "8" (the second layer 332) by applying a forward/backward/left/right, right-forward, left-forward, right-backward, or left-backward force on the operation surface. In the example shown in Figure 16(d), a section "82" is selected by applying a force in a right-forward direction on the operation surface.

Then, when the user presses the operation surface of the first sensor 5 with the thumb 22 in a state where "82" is selected on the layer for "8" (the second layer 332), a next layer is reached (see Figure 16(e)). In the example shown in Figure 16(e), in relation to a layer for "82" (a third layer 333), a new ring menu is superimposed with a position of the item "82" at a center, and selection items "821" to "828" are displayed clockwise from a section at a top. Here, as in the case of the first and second layers 331, 332, the user can select one of the eight items on the layer for "82" (the third layer 333) by applying a forward/backward/left/right, right-forward, left-forward, right-backward, or left-backward force on the operation surface. In the example shown in Figure 16(f), a section "821" is selected by applying a force in a forward direction on the operation surface.

The layer for "82" (the third layer 333) is a final layer, and an item "821" is executed when the user presses the operation surface of the first sensor 5 with the thumb 22 in a state where "821" is selected (see Figure 16(g)).

In this manner, item selection across multiple layers can be performed using ring menus, by operating the finger-mounted controller 1 fitted on the first finger 21 of the user with just the thumb 22.

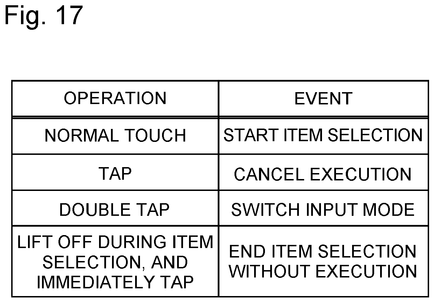

Furthermore, operations such as cancellation of execution and input mode switching may be performed by tap, double tap, and tap & touch by using the touch sensor function, as shown in the table in Figure 17. For example, double tap is performed to cancel an item that is executed at an immediately preceding time point. When transition to a wrong layer is performed during item selection, item selection can be ended by tapping immediately after lift-off, and then, restart is performed. Input mode switching (display position and display size of ring menu, other settings) is performed by displaying, and selecting, a section showing a plurality of input modes as a GUI after detection of tap & touch.

Additionally, the above-described example of operation that uses the film-shaped 3-axis force sensor can be applied to a conventional remote control, a conventional pad and the like that are to be held in a hand.

### 3. Modification

### (First Modification)

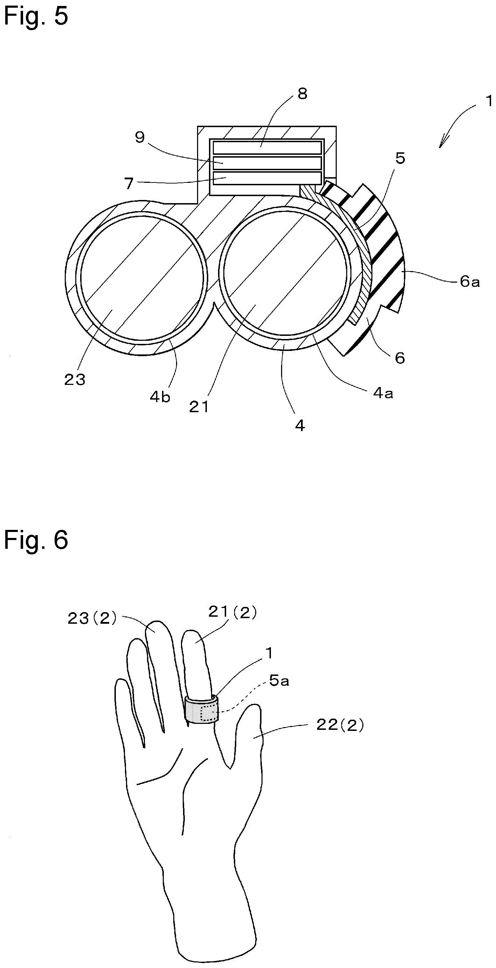

In the example shown in Figure 1, the finger-mounted controller 1 is fitted on the first finger 21, between the first joint and the second joint, but the finger-mounted controller 1 of the first embodiment can be fitted on any part of any finger. For example, as shown in Figure 6, the finger-mounted controller 1 may be fitted on a root of the first finger 21.

### (Second Modification)

Furthermore, from the standpoint of operation, the first finger 21 is desirably one of four fingers, other than the thumb, of one hand of the user, but there may be a case where the user can more easily perform tasks other than input to the finger-mounted controller 1 if the first finger 21 is not the index finger close to the thumb 22 but is the middle finger. For example, there may be a case where an operation of adjusting a blur, a faded part or a color is simultaneously performed by using the finger-mounted controller 1 fitted on the middle finger while writing a letter or drawing on a pad with the index finger.

Additionally, it is also possible to use the thumb as the first finger 21. In this case, the first sensor 5 is touched with one or more of the four fingers of the same hand excluding the thumb.

### (Third Modification)

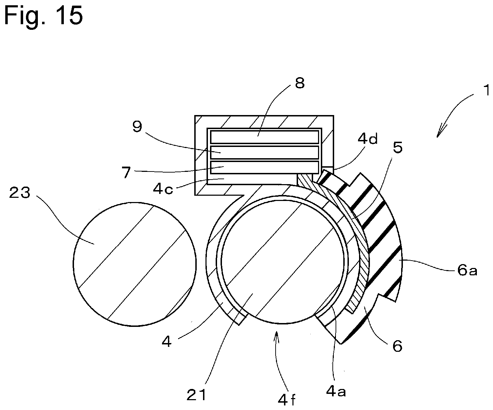

Furthermore, with the mounting member 4 according to the first embodiment, the inner circumferential surface of the first opening 4a does not necessarily have to completely surround the first finger 21 as in the case shown in Figure 2. That is, the inner circumferential surface of the first opening 4a may be made discontinuous due to a gap 4f. For example, a part forming an inner circumference of the first opening 4a may be cross-sectionally C-shaped, as shown in Figure 15.

The finger-mounted controller configured in the above manner can be fitted regardless of a size of the first finger 21 if the mounting member 4 is formed from a deformable material and the first finger 21 is inserted into the first opening 4a having a rather small inner diameter.

### (Fourth Modification)

Furthermore, the first sensor 5 described above includes the touch sensor function, but in the present embodiment, the function does not necessarily have to be included. The touch sensor function can be omitted depending on details of a required operation.

### [Second Embodiment]

In the following, a second embodiment of the present invention will be described with reference to the drawing.

Figure 4 is a schematic cross-sectional view showing another example configuration of the finger-mounted controller (ring-shaped) according to the present invention.

The finger-mounted controller 1 of the present invention may further include, on the outer surface of the mounting member 4, a second sensor 10 that is disposed to face a second finger 23 that is one of four fingers other than the thumb 22 and that is next to the first finger 21.

The second sensor 10 detects presence/absence of pressure or contact between the first finger 21 and the second finger 23. For example, there may be cited a capacitive touch sensor that measures a capacitance of an electrode, and that detects pressure or contact based on a change in the capacitance. Any other known sensor that detects presence/absence of pressure or contact may be used. In the example shown in Figure 4, the first finger 21 is the index finger, and the adjacent second finger 23 is the middle finger.

The control circuit 7 is electrically connected also to the second sensor 10, and the mounting member 4 includes an outlet 4e for a wire that extends between the control circuit 7 housed in the space 4c and the second sensor 10 that is disposed on the outer surface (see Figure 4).

According to such a configuration, the finger-mounted controller 1 can control the first sensor 5 such that power consumption is smaller when absence of pressure or contact is detected by the second sensor 10 than when presence of pressure or contact is detected. A state where power consumption is small is a state where detection by the first sensor 5 is not performed or a state where a detection interval of the first sensor 5 is increased, for example.

Other configurations are the same as those of the first embodiment, and description thereof is omitted.

### [Third Embodiment]

In the following, a third embodiment of the present invention will be described with reference to the drawing.

Figure 5 is a schematic cross-sectional view showing another example configuration of the finger-mounted controller (ring-shaped) according to the present invention.

In the first embodiment, the ring-shaped mounting member 4 includes only the first opening 4a, but the finger-mounted controller 1 of the present invention is not limited to such a shape. For example, the ring-shaped mounting member 4 may include a second opening 4b in addition to the first opening 4a. The second opening 4b is for receiving a second finger 23 that is one of three fingers 2 other than the thumb 22 and the first finger 21 of the same hand, and that is next to the first finger 21. In the example shown in Figure 6, the first finger 21 is the index finger, and the second finger 23 is the middle finger.

According to such a configuration, when a shearing force is applied to a pressure sensitive surface of the finger-mounted controller 1, in a circumferential direction of the first finger 21, the second finger 23 inserted into the second opening 4b serves as a stopper, and the mounting member 4 can be prevented from rotating around the first finger 21. When the mounting member 4 rotates around the first finger 21 at a time of input, the active area 5a of the first sensor 5 is moved and input becomes difficult.

Other configurations are the same as those of the first embodiment, and description thereof is omitted.

### [Fourth Embodiment]

In the following, a fourth embodiment of the present invention will be described with reference to the drawing.

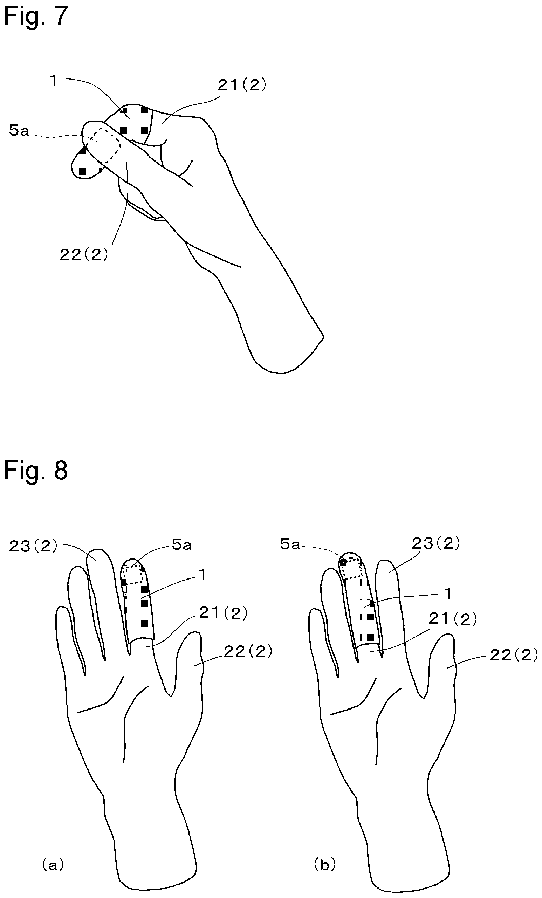

Figure 7 is an explanatory diagram showing an example configuration of a finger-mounted controller (fingerstall-shaped) according to the present invention and an example of operation.

In the first embodiment, the finger-mounted controller 1 is ring-shaped, but the finger-mounted controller 1 of the present invention is not limited to such a shape. For example, the finger-mounted controller 1 may be fingerstall-shaped. As shown in Figure 7, a fingerstall shape is a shape of a bag that covers the finger 2 from a fingertip to a root of the finger. That is, the shape of the mounting member 4 is different from that of the ring-shaped finger-mounted controller 1. Additionally, although it has the same cross-section as that in Figure 2 of the first embodiment, the first opening 4a of the mounting member 4 is not a through hole.

In the present embodiment, the mounting member 4 is fingerstall-shaped, and compared to a ring shape, an area of the active area 5a of the first sensor 5 may be increased. As described in the first embodiment, the first sensor 5 allows simultaneous input of a direction and a movement amount based on a slight movement of the thumb 22, but when the active area 5a is increased in a direction from the fingertip to the root of the finger, a greater variety of operations of the thumb 22 can be achieved.

Because the mounting member 4 of the present embodiment has a shape of a fingerstall, a material that is easily deformable can be used so that joints of the finger 2 can be easily bent. For example, thermoplastic elastomer resin that is polyester-based, olefin-based, urethane-based, or polyamide-based is desirably used due to superior deformability for fitting the first finger 21 of the user.

Other configurations are the same as those of the first embodiment, and description thereof is omitted.

### [Fifth Embodiment]

In the following, a fifth embodiment of the present invention will be described with reference to the drawings.

Figure 8 is an explanatory diagram showing another example configuration of the finger-mounted controller (fingerstall-shaped) according to the present invention and an example of attachment. In Figure 8, (a) is an example where the first finger is the index finger, and (b) is an example where the first finger is the middle finger. Figure 9 is an explanatory diagram showing an example of operation of the finger-mounted controller (fingerstall-shaped) shown in Figure 8(b).

With the fingerstall-shaped finger-mounted controller 1 of the fourth embodiment, the active area 5a of the first sensor 5 is at a position that can be touched by the thumb 22 of the same hand, but the finger-mounted controller 1 of the present invention is not limited to such a mode. For example, as shown in Figure 8, in the case where the mounting member 4 has the shape of a fingerstall, the active area 5a of the first sensor 5 may be arranged on a belly of a fingertip.

According to such a configuration, input can be performed by pressing a belly of the finger 2 wearing the finger-mounted controller 1 against a desk or a part of a body (such as a thigh or a back of a hand not wearing the finger-mounted controller 1).

In this case, the first sensor 5 is not operated with the thumb 22, and thus, any finger 2 including the thumb 22 of the same hand can be made the first finger 21 where the finger-mounted controller 1 is to be fitted. In Figure 8, (a) is an example where the finger-mounted controller 1 is attached by inserting the index finger as the first finger 21 into the first opening 4a of the mounting member 4, and (b) is an example where the finger-mounted controller 1 is attached by inserting the middle finger as the first finger 21 into the first opening 4a of the mounting member 4. Moreover, attachment to two or more fingers is also possible.

Other configurations are the same as those of the first embodiment, and description thereof is omitted.

Heretofore, embodiments of the present invention have been described, but the present invention is not limited to the embodiments, and various changes may be made within the scope of the invention.

### Reference Signs List

- 1: finger-mounted controller
- 2: finger
- 21: first finger
- 21a: belly
- 22: thumb
- 23: second finger
- 3: external electronic device
- 31: screen
- 32, 33: GUI
- 321, ..., 323: section
- 331: first layer
- 332: second layer
- 333: third layer
- 4: mounting member
- 4a: first opening
- 4b: second opening
- 4c: space
- 4d, 4e: outlet
- 4f: gap
- 5: first sensor
- 5a: active area
- 6: protective layer
- 6a: protruding part
- 7: control circuit
- 8: wireless transmitter/receiver
- 9: battery
- 10: second sensor

## Claims

1. A finger-mounted controller for controlling an external electronic device by being fitted on a finger of a user, the finger-mounted controller comprising:
a mounting member including a first opening for receiving a first finger of the user;
a first sensor that is film-shaped and that is disposed on at least a part of an outer surface of the mounting member, the first sensor configured to detect force in three axes on an active area;
a protective layer for covering the first sensor;
a control circuit that is housed inside the mounting member, and that is electrically connected to the first sensor;
a wireless transmitter/receiver that is housed inside the mounting member and is configured to communicate with the external electronic device by being electrically connected to the control circuit; and
a battery that is housed inside the mounting member, the battery being for supplying power to the control circuit.

2. The finger-mounted controller according to claim 1, wherein the mounting member is ring-shaped.

3. The finger-mounted controller according to claim 1, wherein the mounting member is fingerstall-shaped.

4. The finger-mounted controller according to claim 3, wherein the active area of the first sensor is positioned on a belly of a fingertip of the first finger of the user.

5. The finger-mounted controller according to claim 1, wherein
the first finger is one of four fingers of one hand of the user other than a thumb, and
the active area of the first sensor is positioned at a part that can be touched by the thumb of the one hand.

6. The finger-mounted controller according to claim 5, wherein a thickness of the protective layer is increased only on the active area of the first sensor to form a protruding part.

7. The finger-mounted controller according to claim 5, further comprising a second sensor that is disposed on an outer surface of the mounting member in a manner facing a second finger that is one of four fingers other than the thumb and that is next to the first finger, the second sensor configured to detect presence/absence of pressure or contact between the first finger and the second finger, wherein
the control circuit is electrically connected to the second sensor, and controls the first sensor such that power consumption is smaller when absence of the pressure or the contact is detected by the second sensor than when presence of the pressure or the contact is detected.

8. The finger-mounted controller according to claim 7, wherein a state where the power consumption is small is a state where detection by the first sensor is not performed.

9. The finger-mounted controller according to claim 7, wherein a state where the power consumption is small is a state where a detection interval of the first sensor is increased.

10. The finger-mounted controller according to claim 2, wherein
the first finger is one of four fingers of one hand of the user other than a thumb,
the active area of the first sensor is positioned at a part that can be touched by the thumb of the one hand, and
the mounting member includes a second opening for receiving a second finger that is one of three fingers of the one hand other than the thumb and the first finger and that is next to the first finger.

11. The finger-mounted controller according to claim 1, wherein the first sensor further includes a touch sensor function for detecting whether an object is coming into contact or into proximity.
